Europäisches Patentamt

(19) European Patent Office

Office européen des brevets

(11) Publication number: **0 225 691**
**B1**

(12) **EUROPEAN PATENT SPECIFICATION**

(45) Date of publication of the patent specification:
14.03.90

(51) Int. Cl.⁴: **F16B 11/00**, C09J 5/02,
B05D 5/00

(21) Application number: 86307622.0

(22) Date of filing: 02.10.86

(54) Aluminium metal products and the formation of adhesively-bonded structures.

(30) Priority: 10.10.85 GB 8525011

(43) Date of publication of application:
16.06.87 Bulletin 87/25

(45) Publication of the grant of the patent:
14.03.90 Bulletin 90/11

(84) Designated Contracting States:
BE DE ES FR GB IT NL SE

(56) References cited:
DE-A- 2 720 927
GB-A- 2 139 540
US-A- 3 192 619

(73) Proprietor: ALCAN INTERNATIONAL LIMITED,
1188 Sherbrooke Street West, Montreal Quebec
H3A 3G2(CA)

(72) Inventor: Sheasby, Peter Geoffrey, 71 Courtington Lane
Bloxham, Banbury Oxon(GB)
Inventor: Beuchel, Edwin, Am Habichtsfang 7,
D-3412 Noerten-Hardenberg(DE)
Inventor: Campbell, Ian M., Rohnstrasse 12,
D-3400 Goettingen(DE)
Inventor: Heinze, Martin, Nikolausberger Weg 31,
D-3400 Goettingen(DE)
Inventor: Swenson, Willard E., 6752 Windmill Lane, Union
Lake Michigan 48085(US)

(74) Representative: Pennant, Pyers et al, Stevens, Hewlett &
Perkins 5 Quality Court Chancery Lane, London,
WC2A 1HZ(GB)

ACTORUM AG

## Description

This invention concerns a method of converting a coil of aluminium sheet into an adhesively-bonded structure of press-formed aluminium components. It also concerns an aluminium metal sheet product suitable for use in the method, and the formation of shaped components therefrom. Structures of shaped aluminium components joined by adhesive are widely used in the aircraft industry. The automobile industry has for many years wished to use such structures in vehicles in order to take advantage of the superior strength/ weight ratio of aluminium to steel. However, this has not so far proved practicable. The available adhesives provide adequately strong joints only when applied under controlled conditions which are difficult to achieve in a vehicle production line.

GB-A 2 139 540 describes a method of converting a coil of aluminium sheet into a structure of press-formed aluminium components, comprising the steps:

(i) uncoiling the aluminium sheet and pretreating the uncoiled sheet to produce a surface layer thereon containing at least 5% by weight of chromium,
(ii) applying a press lubricant to the pretreated layer,
(iii) cutting the sheet into pieces,
(iv) press-forming the pieces into the shapes of the desired components,
(v) without removing the lubricant, applying adhesive to the components and bringing the components together in the shape of the desired structure,
(vi) spot-welding the components together, and
(vii) curing the adhesive to form the desired structure.

The press lubricant is useful, not only in the press-forming step (iv), but also to improve the storage stability of the chromium-containing surface layer before and after step (iii). The method is valuable in that it permits for the first time the conversion of aluminium sheet in coil form on a production line to structures of bonded shaped components. But it suffers from a number of practical disadvantages:

— The lubricated sheet resulting from step (ii) is slippery and difficult to grip by conventional in-line equipment.
— The lubricant provides very little protection against accidental abrasion contamination and scoring, such as is liable to occur on a production line.
— Because it is impractical to remove the lubricant, the adhesive is arranged to be compatible with it. This restricts choice of both adhesive and lubricant and may weaken the adhesive bond obtained.

The present invention arises from the idea of avoiding these difficulties by using, instead of a press lubricant, a peelable film of organic paint or lacquer.

US Patent 3 192 619 describes a metal forming process in which there is applied to the metal sheet a lubricant coating based on a cellulose ether. The coating weighing up to 15g/m². After forming, the coating may be removed by the use of organic solvents or a solvent steam-cleaner.

In one aspect, the invention provides an aluminium product in the form of flat or coiled aluminium metal sheet or a component press-formed therefrom, a surface of the metal carrying an artificially applied strongly adherent protective layer, characterized in that there is present on the surface of the protective layer a peelable film of an organic paint or lacquer.

In another aspect, the invention provides a method making a component by press-forming into the shape of the component an aluminium metal sheet carrying on the surface thereof an artificially applied strongly adherent protective layer, characterized by applying to the surface of the protective layer a peelable film of an organic paint or lacquer, then press-forming the sheet, and then peeling the film from the component.

In yet another aspect, the invention provides a method of converting a coil of aluminium sheet into an adhesively-bonded structure of press-formed aluminium components, comprising the steps:

(a) uncoiling the aluminium sheet and pretreating the metal to apply thereon a strongly adherent protective layer to act as a base for subsequently applied adhesive,
(b) applying a peelable film of an organic paint or lacquer over the adherent layer,
(c) cutting the sheet into pieces,
(d) press-forming the pieces into the shapes of the desired components,
(e) removing the peelable film from the components,
(f) applying adhesive to the components, bringing the components together and curing the adhesive to form the desired structure.

The term "aluminium" is used herein to include, not only the pure metal, but also Al rich alloys, particularly those of the kinds envisaged for vehicle construction such as the 2000 and 5000 and 6000 Series of the Aluminum Association Inc. Register.

The metal sheet needs to have adequate strength for its intended use, but should not be so rigid that it cannot pass round the rolls used in continuous surface pretreatment. Metal sheet thickness should normally be 0.7 to 2.5 mm preferably 1.2 to 2.0 mm, depending to some extent on the alloy used.

Formation of the strongly adherent protective layer involves pretreatment of aluminium in coil form. The metal is said to be in coil form when it is a sheet of indefinite length. Such sheet is normally coiled for convenience of storage; for the pretreatment, it has, of course, to be temporarily uncoiled. In order that the pretreatment may be truly continuous, the back end of one coil may be joined to the front end of the next. This pretreatment replaces the oxide layer that is ordinarily present on aluminium in air by an artificially applied surface layer. This artificial layer is very thin, typically less than 0.4 microns. The chemical composition of this layer is variable and is not always easy to determine. It may for example be an oxide layer or a conversion coating such as a chromate conversion coating.

The surface pretreatment is subject to several requirements. It must be suitable for application to metal drawn from coil, which means that it must be reasonably fast; conventional phosphoric acid anodizing is not preferred for this reason. The resulting surface layer must not be destroyed by subsequent operations including forming, curing of adhesive, and perhaps also preparation for painting. Also, the surface layer must be compatible with adhesive and perhaps also with paint.

The adherent protective layer should be sufficiently thick to provide a sound base for reliable strong and durable adhesive joints between pieces of the metal. Also, the protective layer should be thick enough to withstand extended storage, in the presence of a peelable film. Protective layers that are too thick not only cost more but may (depending on the pretreatment) crack or craze, on drying and/or when the metal sheet is press-formed. Also, if the protective layer is too thick, its electrical resistance may be so high that spot welding is difficult. The protective layer is generally applied at a dry rate of 0.03 to 1.0, preferably 0.1 to 0.5, grams per square meter, the optimum thickness depending on the nature of the pretreatment.

One suitable pretreatment is that marketed by Pyrene Chemical Services Ltd. under the Trademark Bonderite 735. This may be used to deposit 0.03 to 0.9, preferably from 0.1 to 0.3, grams per square metre of surface layer which results in adhesive joints of good strength and durability. The surface layer is believed to consist essentially of hydrated chromium phosphate, with small amounts of chromium oxide and aluminium fluoride present close to the aluminium/conversion coating interface. A recommended process sequence is spray acid clean, spray water rinses, spray application of conversion coating, spray water rinses, hot air drying.

Another preferred pretreatment is that marketed by Albright & Wilson Limited under the Trademark Accomet C. This is a "no rinse" treatment and is of particular interest for coil coating purposes as it involves roller application of a chromate based coating which is non-reactive and requires no subsequent rinsing. This minimises the effluent treatment required and makes the process relatively simple to control. A recommended process sequence is spray acid clean, spray water rinses, roller-coat application of Accomet C, dry.

Other suitable pretreatments include alternative chromate-phosphate coatings such as that marketed by I.C.I. under the Trademark Alodine 407/47. Also suitable are anodizing treatments, for example AC anodizing in hot sulphuric acid (British Patent Specification No. 1 235 661), and the various treatments described in GB-A 2 139 540.

The film of organic paint or lacquer is said to be peelable in the sense that it can be pulled or peeled off the formed metal surface without excessive tearing. It would not be practicable to scrape the film off the metal, nor to remove it by solvent or chemical means. The term "peelable" thus requires that the film be so thick that its tear strength is greater than the adhesive strength between the film and the metal.

Peelable films of organic paint or lacquer have been used in the past to protect bare metal surfaces, e.g. polished work against mechanical damage. But to the best of applicants knowledge, such peelable films have not previously been used to protect artificially applied strongly adherent protective layers on metal. This new use of peelable films gives rise to several advantages as noted below.

Organic paints and lacquers and techniques for applying peelable films thereof to metal surfaces are well known and will not be described here. Suitable lacquers include those based on polyvinyl chloride, acrylic resins and polyvinyl alcohol. Solvent-based PVC lacquers have proved particularly suitable. The applied film is preferably fairly thick, for example from 40 or 50 to 80 microns. The use of such relatively thick films reduces the danger of accidental damage to the substrate, improves the formability of the aluminium sheet, and is readily peeled from the component after forming. Techniques for applying the films includes spraying and roller coating, the latter technique being preferred where thick films are required.

The aluminium metal sheet carrying the protective layer and the peelable organic film is cut into pieces of desired size. Generally, it will need to be stored for periods up to several months, either before or after being cut up. The peelable organic film is found to provide satisfactory protection, so that the protective layer is storage stable for these periods and continues to act as an effective base for subsequently applied adhesive.

The pieces of metal sheet are then press-formed into components. Thereafter, the film of organic paint or lacquer is peeled from the components, leaving the strongly adherent protective layer thereon. If desired, a press lubricant can be used for the press-forming operation. Since this is afterwards removed from the components with the peelable film of organic paint or lacquer, the nature and amount of press lubricant used are not critical. Also removed with the peelable film is any dust or dirt or contamination that may have become attached to the metal sheet during its passage along the production line. The shaped component is left with a clean protective surface.

To selected areas of this clean surface is applied an adhesive.

The adhesive must, of course, form strong reliable bonds between components, and these must be capable of retaining their strength under the wide variety of conditions, (for example, in the case of structures for motor vehicles, under conditions of temperature, humidity, corrosion, that motor vehicles generally encounter for a time at least equal to the useful service life of the vehicle). In addition, the adhesive must show these properties on surface pretreated components.

The adhesive must also meet various further requirements. When applied to vertical or overhanging surfaces, it must not sag or slump; this requirement may best be met by the use of a thixotropic material or of a hot melt adhesive applied at elevated temperature. The adhesive needs to wet the metal and show a strong initial tack prior to curing. Since the components of structures are often spot welded prior to curing, and spot welding tends to bow the metal sheet, the adhesive may need to be applied in a thickness sufficient to fill the gaps so formed, which may be up to 3 mm wide. The adhesive needs to be fluid enough to be squeezed out of the way by the pressure of a spot welding gun.

The adhesive needs to be curable, under conditions which do not damage the structure, to a state which is strong without being brittle. The required impact resistance may be achieved by including a toughening agent, e.g. a rubbery phase, in the adhesive.

Although these requirements are quite stringent, it is not too difficult to find commercially available products that meet them. Different companies sell acrylic, vinyl plastisol, epoxy, and elastomeric adhesives. Two preferred adhesives are single component elevated temperature curing epoxy materials. The first is that sold by 3M Company under the Trademark EC.2214, a conventional non-toughened epoxide which exhibits good storage properties and reasonable general performance. The second is that sold by Permabond Inc. under the Trademark ESP 105, an epoxide which, toughened by a disperse rubbery phase, provides higher peel strengths, improved impact resistance, and improved resistance to severe stress-humidity conditions.

Other useful adhesives include single-component toughened epoxy materials sold: by Ciba Geigy Plastics & Additives Co. under the Trademark XD 4199; by 3M Company under the Trademark 7823 G; and by Permabond Inc. under the Trademark ESP 110. Two-part acrylic adhesives, which are widely used for bonding steel, have the valuable property (for use in this invention) of being relatively insensitive of oil contamination on the metal surface.

When the components, coated where necessary with uncured adhesive, are assembled, the assembly needs to be held prior to and during curing of the adhesive. This may be done by means of a jig or by riveting, but a more convenient technique for a mass production line is spot welding. The spot welds also act as peel stoppers. This combination of adhesion and spot welding, known as weldbonding, is described in a paper T17 published by the Aluminium Association in 1978 entitled "Weldbonding – an alternative joining method for aluminium autobody alloys", and is also referred to in GB-A 2 139 540.

Spotwelding is effected through the adherent surface layer applied in the initial pretreatment. If this layer is too thick, the electrical resistance may be too high and ease of spot welding may be impaired. Layer thickness appears in this respect to be more important than composition. For spot welding, a surface layer of about 0.1–0.5 grams per square meter is preferred.

The adhesive needs to be cured under appropriate conditions, e.g. ten to thirty minutes at 150 to 180°C, to form the desired structure. If the structure is to be painted, the next step is a cleaning step which may be conventional, for example an inhibited alkaline cleaner. The adherent surface layer should be chosen such that it is not destroyed or seriously damaged by this cleaning step. Finally a paint coating is applied. Again, the adherent surface layer must be compatible with any paint coating applied and must form a sound substrate for such paint coating.

In the method of GB-A 2 139 540, the shaped components can be immediately assembled, without any pretreatment apart from the application of adhesive, into the desired structure. By contrast, in the method of the present invention, the shaped components must be treated to remove the peelable film of organic paint or lacquer before being assembled to form the structure. But this disadvantage is more than made up for by the following advantages:

A. Use of a peelable film in place of a press lubricant means that the coated metal coil is not slippery, and enables it to be handled by conventional equipment without modification.

B. Adventitious dirt and dust and lubricant which may adhere to the metal sheet during its passage along a production line and through a press, are automatically removed together with the peelable film. Press-forming equipment often carries lubricant residues of a kind to which adhesive are often intolerant.

C. For press-forming, a lubricant may or may not be needed in addition to the peelable film. If it is needed, then there is no restriction on either the amount or the nature of the lubricant used, since lubricant is afterward removed with the peelable film. In particular, it is not necessary to choose a lubricant that is compatible with adhesive.

D. Adhesive is applied to a clean protective surface on metal, As a result, stronger bonds are formed. Also, the adhesive is chosen with an eye to forming a strong adhesive bond, and without reference to its compatibility with any press lubricant.

E. The peelable film of paint or lacquer protects the surface layer from accidental abrasion or scoring. The extent of protection is surprisingly greater than that provided by press lubricant.

F. The peelable film of paint or lacquer surprisingly retains integrity during press-forming of the metal sheet, and can subsequently be quickly and easily peeled from the shaped component.

## Example

Coils of AA 5251 alloy, in guages ranging from 0.7 mm to 2.3 mm and in widths up to 1650 mm, were subjected on both sides to a no-rinse chromate pretreatment. The coils were then roller coated with a high solids PVC organosol. The dried PVC film was about 60 microns thick and was peelable. Blanks were cut from the pre-treated coated coils and were press formed into components. The PVC coatings were found to have such good lubricating properties that no additional lubricant was applied to the blanks before forming. The PVC coatings were manually peeled, and the components were adhesively bonded into loadbearing structures of several prototype motor vehicles, which performed satisfactorily.

## Claims

1. An aluminium product in the form of flat or coiled aluminium metal sheet or a component press-formed therefrom, a surface of the metal carrying an artificially applied strongly adherent protective layer, characterized in that there is present on the surface of the protective layer a peelable film of an organic paint or lacquer.

2. A product as claimed in claim 1, wherein the peelable film is of polyvinyl chloride.

3. A product as claimed in claim 1 or claim 2, wherein the peelable film is from 50 to 80 microns thick.

4. A product as claimed in any one of claims 1, 2 and 3, whereine the protective layer is chromate-based.

5. A method of making a component by press-forming into the shape of the component an aluminium metal sheet carrying on the surface thereof an artificially applied strongly adherent protective layer, characterized by applying to the surface of the protective layer a peelable film of an organic paint or lacquer, then press-forming the sheet, and the peeling the film from the component.

6. A method of converting a coil of aluminium sheet into an adhesively-bonded structure of press-formed aluminium components, comprising the steps:

(a) uncoiling the aluminium sheet and pretreating the metal to apply thereon a strongly adherent protective layer to act as a base for subsequently applied adhesive,
(b) applying a peelable film of an organic paint or lacquer over the adherent layer,
c) cutting the sheet into pieces,
d) press-forming the pieces into the shapes of the desired components,
(e) removing the peelable film from the components,
(f) applying adhesive to the components, bringing the components together and curing the adhesive to form the desired structure.

7. A method as claimed in claim 5 or claim 6, wherein the peelable film is of polyvinyl chloride.

8. A method as claimed in any one of claims 5, 6 and 7, wherein the peelable film is from 50 to 80 microns thick.

9. A method as claimed in any one of claims 5, 6, 7 and 8, wherein the protective layer is chromate-based.

## Patentansprüche

1. Aluminiumprodukt in Form eines flachen oder aufgerollten Aluminiummetallbleches oder einer preßverformten Komponente davon, wobei eine Oberfläche des Metalls eine künstlich aufgebrachte, stark anhaftende Schutzschicht trägt, dadurch gekennzeichnet, daß an der Oberfläche eine Schutzschicht eines abschälbaren Films aus einem organischen Farbstoff oder Lack vorliegt.

2. Produkt gemäß Anspruch 1, bei dem der abschälbare Film aus Polyvinylchlorid ist.

3. Produkt gemäß Anspruch 1 oder Anspruch 2, bei dem der abschälbare Film 50 bis 80 μm dick ist.

4. Produkt gemäß einem der Ansprüche 1, 2 und 3, bei dem die Schutzschicht auf einem Chromat aufgebaut ist.

5. Verfahren zur Herstellung einer Komponente durch Preßformgebung in die Form der Komponente eines Aluminiummetallbleches, welches an der Oberfläche eine künstlich angebrachte, stark anhaftende Schutzschicht trägt, dadurch gekennzeichnet, daß man an die Oberfläche der Schutzschicht einen abschälbaren Film aus einem organischen Farbstoff oder einem Lack aufbringt, dann das Blech preßverformt und dann den Film von der Komponente abschält.

6. Verfahren zum Umwandeln einer Rolle aus einem Aluminiumblech in eine durch Kleben gebundene Struktur von preßverformten Aluminiumkomponenten, umfassend die Stufen:

a) Abwickeln des Aluminiumbleches und Behandeln des Metalls unter Aufbringen einer stark anhaftenden Schutzschicht, die als Grundlage für einen nachfolgend aufgebrachten Kleber dient,
b) Aufbringen eines abschälbaren Films auf einem organischen Farbstoff oder Lack auf der anhaftenden Schicht,
c) Schneiden des Bleches in Stücke,
d) Preßverformen der Stücke in die Form der gewünschten Komponenten,
e) Entfernen des abschälbaren Films von den Komponenten,
f) Aufbringen von Kleber auf die Komponenten, Zusammenbringen der Komponenten und Härten des Klebers unter Ausbildung der gewünschten Struktur.

7. Verfahren gemäß Anspruch 5 oder Anspruch 6, bei dem der abschälbare Film aus Polyvinylchlorid ist.

8. Verfahren gemäß einem der Ansprüche 5, 6 und 7, bei dem der abschälbare Film 50 bis 80 μm dick ist.

9. Verfahren gemäß einem der Ansprüche 5, 6, 7 und 8, bei dem die Schutzschicht auf Chromat aufgebaut ist.

## Revendications

1. Produit à base d'aluminium sous la forme d'une tôle métallique à base d'aluminium plate ou enroulée, ou d'un composant façonné sous pression à partir de cette dernière, une surface du métal comportant une couche protectrice fortement adhérente appliquée artificiellement, caractérisé en ce qu'un film arrachable d'une peinture ou d'un vernis organique, est présent sur la surface de la couche protectrice.

2. Produit selon la revendication 1, dans lequel le film arrachable est en chlorure de polyvinyle.

3. Produit selon la revendication 1 ou la revendication 2, dans lequel le film arrachable, a une épaisseur de 50 à 80 microns.

4. Produit selon l'une quelconque des revendications 1, 2 et 3, dans lequel la couche protectrice est à base de chromate.

5. Procédé de fabrication d'un composant par façonnage sous pression sous la forme du composant, d'une tôle métallique à base d'aluminium comportant sur sa surface, une couche protectrice fortement adhérente appliquée artificiellement, caractérisé en ce qu'on applique sur la surface de la couche protectrice, un film arrachable d'une peinture ou d'un vernis organique, en ce qu'on façonne sous pression la tôle, et en ce qu'on arrache ensuite le film à partir du composant.

6. Procédé de transformation d'un rouleau de tôle d'aluminium, en une structure liée par adhérence formée de composants en aluminium façonnés sous pression, dans lequel :

(a) on déroule la tôle d'aluminium et on prétraite le métal pour appliquer sur celui-ci, une couche protectrice fortement adhérente, destinée à faire office de substrat pour un adhésif ultérieurement appliqué;

(b) on applique un film arrachable d'une peinture ou d'un vernis organique, sur la couche adhérente;

(c) on découpe la tôle en pièces;

(d) on façonne sous pression les pièces, sous les formes des composants requis;

(e) on retire le film arrachable des composants;

(f) on applique un adhésif sur les composants, on assemble les composants et on durcit l'adhésif pour former la structure requise.

7. Procédé selon la revendication 5 ou la revendication 6, dans lequel le film arrachable est en chlorure de polyvinyle.

8. Procédé selon l'une quelconque des revendications 5, 6 et 7, dans lequel le film arrachable, a une épaisseur de 50 à 80 microns.

9. Procédé selon l'une quelconque des revendications 5, 6, 7 et 8, dans lequel la couche protectrice est à base de chromate.